# EUROPEAN PATENT APPLICATION

(11) **EP 1 622 139 A2**
(43) Date of publication of application: **01.02.2006**
(21) Application number: 05105690.1
(22) Date of filing: 24.06.2005
(51) Int. Cl.: G11B 15/22, G11B 15/32, G11B 15/43

(54) **A reel disc brake**

(30) Priority: 29.07.2004 KR 2004059546
(71) Applicant: SAMSUNG ELECTRONICS CO., LTD., Suwon-City, Kyungki-do (KR)
(72) Inventor: Kim, Jun-young 108-1904,dongsuwon LG Village 1st, Gyeonggi-do (KR); Park, Byeng-bae 1172-17,Sadong, Gyeonggi-do (KR); Oh, Jeong-hyeob 309-1005,Chowon-maeul Daewon Apt., anyang-si,Gyeonggi-do (KR); Sim, Jae-hoon 102-1008,Dongsuwon LG Village, Gyeonggi-do (KR); Lee, Seung-woo 542-106, Sinnamusil Ssangyong Apt., Gyeonggi-do (KR); Choi, Hyeong-seok 250-1404, Hwanggol-maeul, Yeongtong-gu,Suwon-si,Gyeonggi-do (KR)
(74) Representative: Geary, Stuart Lloyd

(57) **Abstract**

Disclosed are a reel brake device and a magnetic recording and reproducing apparatus having the same. The reel brake device comprises a tension band mounted on an outer circumference of a reel disc to control tension, the reel disc which is rotatably mounted on the main chassis to drive a tape reel of a tape cassette, and a brake unit fixed on the main chassis to help the tension band be in contact with the outer circumference of the reel disc. This can replace a conventional brake unit having a complicated structure, and therefore, the number of component parts can be reduced.

## Description

The present invention relates to a tape deck comprising a reel disc, a tension band wrapped around the reel disc and reel disc braking means.

A general magnetic recording and reproducing apparatus, such as a video cassette recorder (VCR) or a camcorder, comprises a deck, and records sound and image information onto a recording medium, such as a magnetic tape. The tape moves along a predetermined path and reproduces the recorded information.

The magnetic recording and reproducing apparatus comprises a main chassis having a rotary head drum, a pair of supply reel discs rotatably mounted to the main chassis to drive a tape reel of a tape cassette, a tension unit for generating a predetermined tension while the tape cassette is driven and a brake unit for preventing excessive rotation of the supply reel disc. The pair of supply reel discs comprise a supply reel disc for supplying the tape and a take-up reel disc for winding the tape being provided by the supply reel disc. Since the take-up reel disc is not an essential element of the present invention, a detailed description thereof will be omitted.

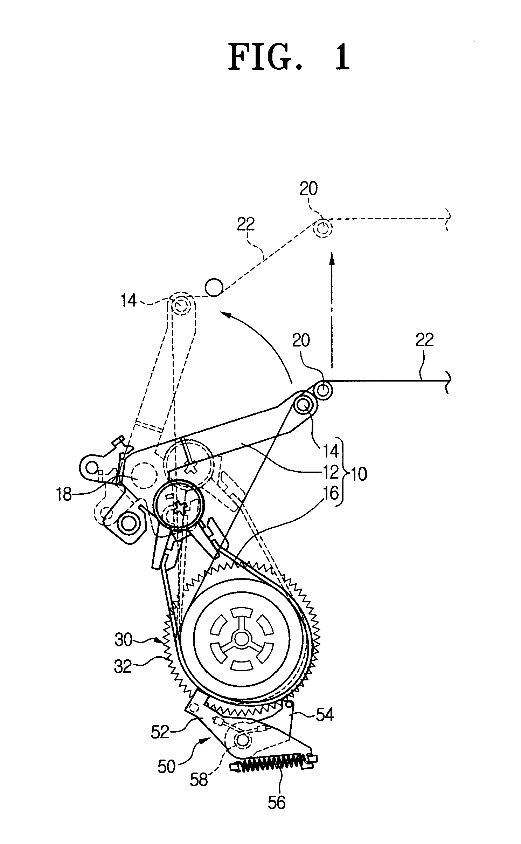

Figure 1 shows a tension unit 10 mounted on a main chassis (not shown), a supply reel disc 30 rotated by the tension unit 10 and a brake unit 50 rotatably mounted to the main chassis (not shown) to apply a brake to the supply reel disc 30.

The tension unit 10 comprises a tension arm 12 pivotably mounted on the main chassis, a tension pole 14 formed at one end of the tension arm 12 to withdraw the magnetic tape 22 from a tape cassette and a tension band 16 mounted on the tension arm 12 which is wrapped around an outer periphery of the supply reel disc 30. The supply reel disc 30 has a reel gear 32, at a lower part thereof, which is rotated by power transmitted from a capstan motor (not shown).

The brake unit 50 is pivotably mounted to the main chassis to selectively brake the supply reel disc 30. The brake unit 50 comprises a sub brake 52, a main brake 54, a coil spring 56 and a torsion spring 58. The sub brake 52 is pivotably mounted to the main chassis so that one end thereof selectively biases the tension band 16 against the supply reel disc 30. The main brake 54, which is coaxial with the sub brake 52, is pivotably mounted on the main chassis to selectively lock and release the supply reel disc 30. The coil spring 56 pushes the sub brake 52 into contact with the supply reel disc 30 using an elastic force. The torsion spring 58 is located between the sub brake 52 and the main brake 54 to elastically push the main brake 54 so as to contact with the reel gear 32.

A dotted line in Figure 1 shows the tension unit 10 when the tape cassette is loaded into the magnetic recording and reproducing apparatus. When the tape cassette is loaded, the tension arm 12 rotates about an axis 18 in association with a cam gear (not shown) which is driven by a driving motor (not shown) in a direction illustrated by an arrow. Therefore, the tension pole 14 provided at the end of the tension arm 12 and a pole base unit 20 withdraw the magnetic tape 22 from the tape cassette. The magnetic tape 22 being withdrawn rotates the reel (not shown) of the tape cassette, and the reel of the tape cassette consequently rotates the supply reel disc 30. Due to the rotational inertia of the supply reel disc 30, the magnetic tape 22 may be excessively withdrawn after the tape cassette is loaded. To avoid this, the tension band 16 is provided on the outer periphery of the supply reel disc 30. The sub brake 52 pushes the tension band 16, thereby applying a predetermined frictional force to the supply reel disc 30. Due to this frictional force, the supply reel disc 30 is prevented from being rotated after loading the tape cassette. In addition, the main brake 54 is connected and locked to the reel gear 32 mounted on the lower part of the supply reel disc 30. This prevents the tape from being withdrawn continuously by the rotational inertia of the supply reel disc 30 when the tape which is playing is stopped.

However, as can be appreciated from the above, the brake unit 50 requires a number of parts and has a complicated structure. Thus, this requires a large number of manufacturing steps. Accordingly, the manufacturing cost and the size of the apparatus are also increased. Therefore, research has been directed to minimizing the size of the apparatus and saving manufacturing costs.

An aspect of the present invention is to overcome at least the above problems and/or disadvantages and to provide at least the advantages described below. Accordingly, an aspect of the present invention is to provide a simplified reel brake device for improved productivity, a compact size and low manufacturing cost by reducing the number of component parts, and a magnetic recording and reproducing apparatus having the same.

In order to achieve the above-described aspects of the present invention, there is provided a tape deck comprising a reel disc, a tension band wrapped around the reel disc and reel disc braking means.

A tape deck according to the present invention is characterised in that said braking means is static.

Other additional and/or preferred features are set forth in claims 10 to 14 appended hereto.

An embodiment of the present invention will now be described, by way of example only, and with reference to Figures 2 to 5C of the accompanying drawings, in which:
Figure 1 is a plan view showing the main parts of a known magnetic recording and reproducing apparatus;
Figure 2 is a perspective view of a magnetic recording and reproducing apparatus according to an embodiment of the present invention;
Figure 3 is a perspective view showing the main parts of Figure 2;
Figure 4 is a sectional view of Figure 3 cut along a line IV-IV; and
Figures 5A to 5C are plan views for explaining the operation of a reel brake device according to an embodiment of the present invention.

In the following description, same drawing reference numerals are used for the same elements even in different drawings.

The matters defined in the description such as a detailed construction and elements are provided to assist in a comprehensive understanding of the invention. Thus, it is apparent that various changes and modifications to the embodiments described herein can be made. Also, detailed descriptions of well-known functions or constructions are omitted to provide a clear and concise description of exemplary embodiments of the present invention.

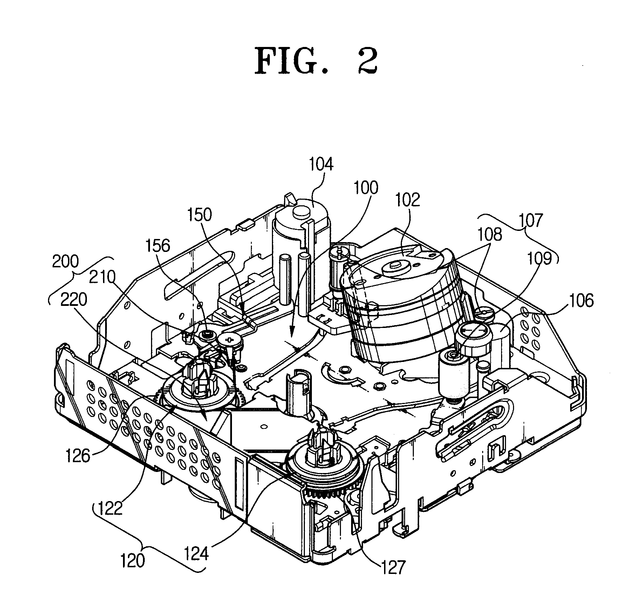

Referring to Figure 2, a magnetic recording and reproducing apparatus according to an embodiment of the present invention comprises a main chassis 100 onto which a rotary head drum 102 for reading and recording information to and from a magnetic tape is mounted. The main chassis also has a pair of reel discs 120 for driving a tape reel of a tape cassette, a reel brake device 200 for arresting rotation of the reel disc 120, and a tension arm unit 150 rotatably mounted to the main chassis 100 to control the tension on the magnetic tape.

The main chassis 100 for mounting the rotary head drum 102 comprises a plurality of guide members 107 for guiding the magnetic tape towards the head drum 102. Each guide member 107 comprises a pinch roller 109 and a pole base unit 108. The main chassis 100 has a capstan motor 106 for driving the reel disc 120 located at the right rear side and a loading motor 104 for transmitting power to other component parts such as the pole base unit 108 that withdraws and guides the magnetic tape located at the left rear side.

The reel disc 120 is connected to the tape reel of the tape cassette to drive the tape reel using the power transmitted from the capstan motor 106. The reel disc 120 comprises a supply reel disc 122 mounted at the left of the main chassis 100 to supply the magnetic tape, and a take-up reel disc 124 for winding the supplied magnetic tape at the right of the main chassis 100. The supply reel disc 122 and the take-up reel disc 124 are respectively provided with reel gears 126 and 127 which transfer the power from the capstan motor 106. Since the present invention mainly relates to a reel brake device used on the supply reel disc 122, and as the take-up reel disc 124 is not an essential feature, the supply reel disc 122 will be referred to as just 'reel disc 122' hereinbelow.

The reel brake device 200 generates friction with the reel disc 122 to prevent the tape from being excessively withdrawn from the tape cassette, as noted above. A detailed exemplary structure for the above will be described hereinbelow.

The tension arm unit 150 is pivotably mounted on the main chassis 100 to pivot about an axis 156 in association with a cam gear (not shown) when the loading motor 104 is driven. Additionally, the tension arm unit 150 controls the rotation of the reel disc 120 so that the magnetic tape is held at a constant tension in the play mode.

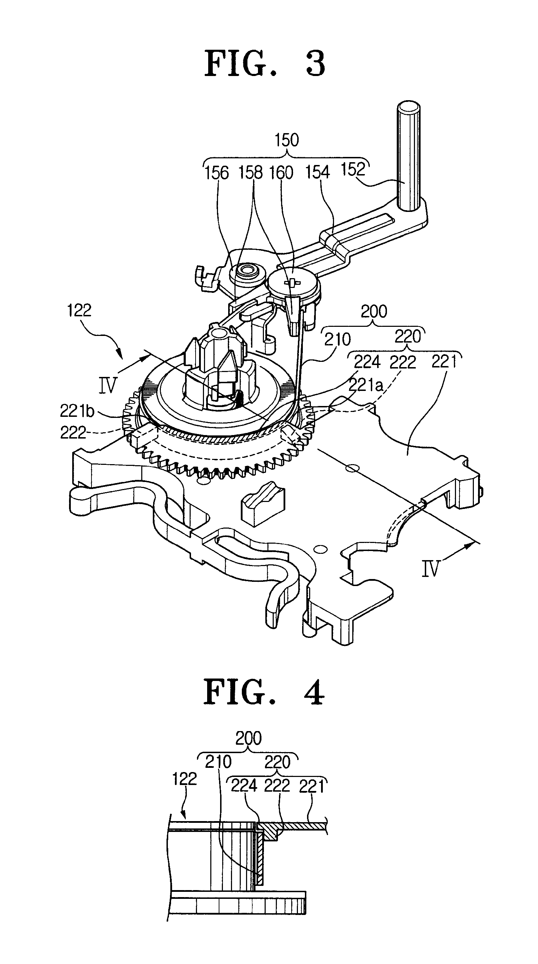

Referring to Figures 3 and 4, the tension arm unit 150 comprises a tension arm 154, a tension pole 152 protruding upwardly from an end of the tension arm 154, a tension band connection part 158 formed on the other end of the tension arm 154 onto which a tension band 210 is mounted and a tension control part 160 for rotating the tension band connection part 158 to control the tension provided to the reel disc 122 by the tension band 210. When the tape cassette is loaded, the tension arm unit 150 pivots about the axis 156 in association with the cam gear (not shown) which is driven by the loading motor 104 (Figure 2). Here, the tension pole 152 withdraws the magnetic tape from the tape cassette. During the play mode, the tension arm 154 pivots in one direction and is elastically biased by an elastic member (not shown). The biasing is such that the tension of the tension band 210 is towards the reel disc 122 and can be controlled in accordance with the tension of the magnetic tape towards the tension pole 152. Accordingly, the tension arm unit 150 maintains a consistent tension on the magnetic tape.

The reel brake device 200 comprises the tension band 210 connected to the tension band connection part 158 by both ends thereof, and a brake unit 220 fixed to the main chassis 100 (Figure 2) so that the tension band 210 is biased against an outer circumference of the reel disc 122. The brake unit 220 comprises a reel cover 221 fixed to the main chassis 100, two protrusions 222 formed on the reel cover 221 to bias at least a part of the tension band 210 against and be contacted with the outer circumference of the reel disc 122, and an extended jaw 224 formed on the reel cover 221 which extends from the protrusions 222 towards the reel disc 122. The protrusions 222 are provided at opposite ends 221a and 221b of the reel cover 221 and distanced from each other. Accordingly, the two projections 221 a and 221 b push the tension band 210 towards the reel disc 122 for a more evenly distributed frictional force. According to an embodiment of the present invention, the protrusion 222 is integrally formed with the reel cover 221, however, the protrusion 222 may be implemented by other various methods, such as, by attaching a separate member to the reel cover 221 using an adhesive. Further, the extended jaw 224 covers an upper part of the tension band 210 from one end 221 a and the other end 221b of the reel cover 221, as shown in Figure 3. Accordingly, the tension band 210 is prevented from escaping from the reel disc 122.

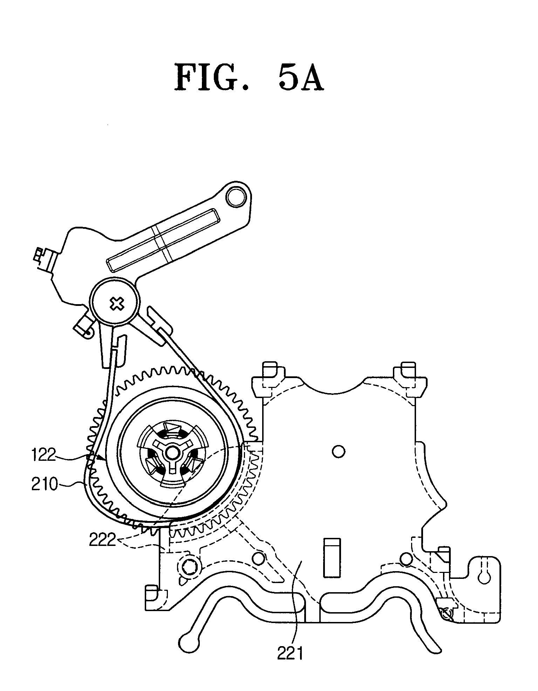

Referring to Figure 5A, the tension band 210 surrounding the outer circumference of the reel disc 122 is slackened in one direction. However, a part of the outer circumference of the reel disc 122 is in contact with the tension band 210 because the protrusion 222 formed on the reel cover 221 pushes the tension band 210 against the reel disc 122. Moreover, since the extended jaw 224 formed on the reel cover 221 restricts movement of the upper part of the tension band 210, the tension band 210 is prevented from escaping from the reel disc 122.

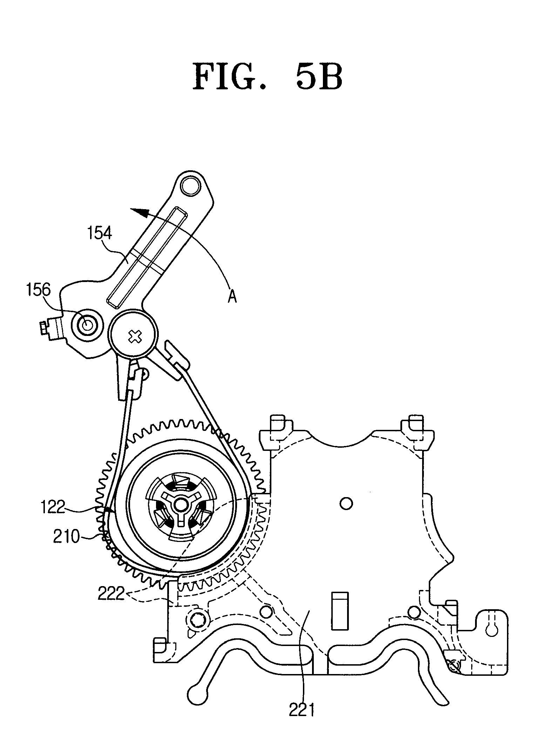

Referring to Figure 5B, the cam gear (not shown) which is driven by the loading motor 104 (Figure 2) drives the tension arm 154. Thus, the tension arm 154 pivots about the axis 156 in the 'A' direction. Accordingly, the tension band 210 mounted on one end of the tension arm 154 is gradually taken up. This means that the tension band 210 contacts with the more of the outer circumference of the reel disc 122. As the magnetic tape is withdrawn from the tape cassette, one reel (not shown) of the tape cassette is rotated, which thereby rotates the reel disc 122. As noted earlier, conventionally, due to rotational inertia the reel disc 122 would keep rotating even after the magnetic tape is loaded. Therefore, the magnetic tape would be excessively withdrawn. However, according to an embodiment of the present invention, due to the protrusion 222 pushing the tension band 210 toward the reel disc 122, a predetermined frictional force is applied to the reel disc 122 by the tension band 210. The frictional force prevents idle rotation of the reel disc 122 after loading the magnetic tape.

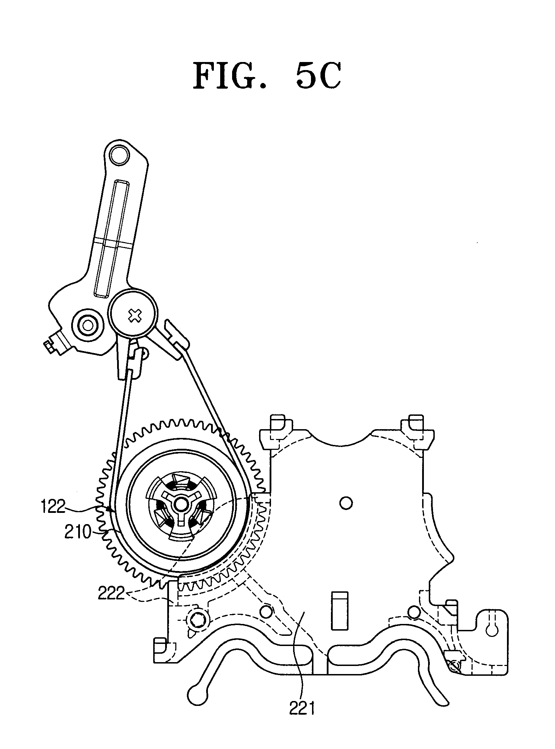

Referring to FIG. 5C, even as the magnetic tape is being played, the protrusion 222 continues to push the tension band 210 towards the reel disc 122. Therefore, the reel disc 122 has a predetermined frictional force applied thereto while rotating. When the tape is stopped, conventionally, the reel disc 122 will keep rotating due to the rotational inertia. However, with the present invention, the frictional force applied to the reel disc 122 by the combination of the tension band 210 and the protrusion 222 prevents the reel disc 122 from idly rotating. Thus, the main brake of a conventional reel brake device, which is used for stopping the rotation of the reel disc 122, can be removed. In addition, a conventional sub brake for pressing the tension band 210 against the reel disc 122 can also be removed since the protrusion 222 of this embodiment maintains the contact between the tension band 210 and the reel disc 122. Thus, as the conventional main brake and sub brake become dispensable, the number of parts in the apparatus are reduced and the assembly process is improved. Moreover, economy in the manufacturing cost and compactness in the size can also be achieved.

## Claims

1. A reel brake device comprising:
a tension band mounted on an outer circumference of a reel disc to provide the reel disc a certain rotational load, the reel disc being rotatably mounted on the main chassis to drive a tape reel of a tape cassette; and
a brake unit fixed on the main chassis for the tension band to be in contact with the outer circumference of the reel disc.

2. The reel brake device of claim 1, wherein the brake unit comprises:
a reel cover fixed on the main chassis; and
at least one protrusion formed on the reel cover to contact the tension band with the outer circumference of the reel disc.

3. The reel brake device of claim 2, wherein the brake unit further comprises an extended jaw at the reel cover to prevent the tension band from being escaped from the outer circumference of the reel disc.

4. The reel brake device of claim 3, wherein the protrusion and the extended jaw are integrally formed with the reel disc.

5. The reel brake device of claim 4, wherein two protrusions are provided at the opposite ends of the reel cover.

6. A magnetic recording and reproducing apparatus comprising:
a main chassis for mounting a head drum that records and reproduces information with respect to a magnetic tape;
a tension arm unit pivoting on the main chassis;
a reel disc rotatably mounted to the main chassis to drive a tape reel of a tape cassette; and
a reel brake device including a tension band fixed on the tension arm unit and a brake unit fixed on the main chassis such that the tension band is contacted with the outer circumference of the reel disc.

7. The magnetic recording and reproducing apparatus of claim 6, wherein the brake unit comprises:
a reel cover fixed on the main chassis;
at least one protrusion formed on the reel cover to contact the tension band with the outer circumference of the reel disc; and
an extended jaw at the reel cover to prevent the tension band from being escaped from the outer circumference of the reel disc.

8. The magnetic recording and reproducing apparatus of claim 7, wherein the protrusion and the extended jaw are integrally formed with the reel disc.

9. A tape deck comprising a reel disc (122), a tension band (210) wrapped around the reel disc (122) and reel disc braking means (220) **characterised in that** said braking means (220) is static.

10. A tape deck according to claim 9, wherein the braking means (220) comprises a protrusion (221a, 221b) which presses the band (210) against the disc (122).

11. A tape deck according to either one of claims 9 or 10, comprising a chassis (100) and a reel disc cover (221), the braking means (220) being integrally formed in the reel disc cover (221).

12. A tape deck according to claim 11, wherein the reel disc cover (221) comprises a lip (224) configured to stop the band (210) from disengaging the disc (122).

13. A tape deck according to claim 12, wherein the lip (224) is formed integrally with the reel disc cover (221).

14. A recording/reproducing apparatus comprising a tape deck according to any one of claims 9 to 13.
